# EUROPEAN PATENT SPECIFICATION

(11) **EP 1 027 134 B1**
(45) Date of publication and mention of the grant of the patent: **11.09.2002**
(21) Application number: 98933567.4
(22) Date of filing: 07.07.1998
(51) Int. Cl.: B01D 51/10, B03C 3/014, F23J 15/00

(54) **A METHOD OF FLUE GAS CONDITIONING AND A FLUE GAS CONDITIONING DEVICE**
VERFAHREN UND VORRICHTUNG ZUR RAUCHGASBEHANDLUNG
PROCEDE ET DISPOSITIF DE CONDITIONNEMENT DE GAZ DE FUMEE

(30) Priority: 11.07.1997 DK 84297
(43) Date of publication of application: 16.08.2000
(73) Proprietor: FLS MILJO A/S, 2500 Valby (DK)
(72) Inventor: ZAMANY, Jamshid, Tehran 16517 (IR)
(74) Representative: Hegner, Mogens
(86) International application number: DK9800316
(87) International publication number: WO99002241

(56) References cited:
- DE-A- 1 557 108
- DE-A- 3 111 074
- US-A- 2 532 260
- US-A- 3 483 674

## Description

The invention relates to a method for conditioning of flue gas where the flue gas is lead to, a flue gas conditioning device comprising an inlet, a diffuser in extension of the inlet and an essentially cylindrical pipe area in extension of the diffuser, said pipe area being equipped with a bottom and an outlet opposite the diffuser, the inner walls of the diffuser and the cylindrical pipe area between inlet and outlet defining a conditioning chamber, means being provided in an area of the conditioning chamber near the outlet to introduce conditioning water into the flue gas, of providing an elevated temperature at the inner wall which defines the conditioning chamber.

Such flue gas conditioning devices are typically used in connection with industrial production systems and in practice always in connection with cement production systems in which burning takes place in a kiln, and in which the flue gas with its content of particles generated by the burning subsequently has to be freed of at least part of these particles in a separator. For example electrostatic precipitators or bag filters may be used in this connection. Such separators make special demands on the state of the flue gas on introduction into these. Thus, for reasons of material alone it is required both in bag filters and in electrostatic precipitators that the flue gas has a suitably low temperature, while ensuring that the flue gas is not wet. The low temperature moreover causes a reduction in the volume of the gas which is to be treated after the conditioning device, and the respective separator may therefore be dimensioned correspondingly smaller. In connection with an electrostatic precipitator it is of great importance that the resistivity of the flue gas particles is sufficiently low to avoid reflection in the electrostatic precipitator, as such reflection results in a state of operation in which the separation capacity is impaired considerably. In connection with bag filters it is likewise of great importance that no wet flue gas is present, since such presence affects the efficiency of the filter and may cause damage to the bag. To adapt the state of the flue gas to the requirements made by the separator, the flue gas, before being introduced into these, is fed into a flue gas conditioning device, as described above.

In the generally known flue gas conditioning devices there is a marked tendency for the flue gas stream to be separated from the inner wall of the conditioning chamber. Usually, it cannot be predicted where this separation of the flue gas stream from the wall face takes place, but the result of it is that, on average, the temperature is considerably lower in the area close to the wall than in the area further toward the centre of the conditioning chamber. This means that in this wall area there is a considerable risk that water drops may settle on the inner wall and here give rise to the formation of encrustations, or will find their way from there to the bottom of the.conditioning device. The latter results in a wet bottom in the device, which is extremely undesirable in connection with discharge and optional upstream reintroduction of dust which has settled in the conditioning device.

The above-mentioned problems are particularly pronounced in conditioning devices in which the inlet pipe has a course generating a considerable pressure gradient across the inlet cross-section, which - in the side concerned where the pressure is low - results in an increased tendency for the flue gas to be separated from the wall area with consequences as described above, but to an even more pronounced degree. Such inlets are characterized in that over a distance of up to 5 inlet pipe diameters these do not have an axis in parallel with the central axis of the conditioning chamber. This structure is common for several reasons. For one thing, such a structure involves a great overall height, which is undesirable, and for another, it is generally not practically possible to provide support for such a high pipe.

To overcome the separation phenomenon to some extent it is common that a grating is placed in such conditioning devices, upwardly in the device and in this connection preferably in the area at the diffuser. Such a grating serves to smoothen the flue gas stream so as to bring about a more uniform flue gas stream. Such a grating remedies the above-mentioned problems in part. Another attempt at remedying the problem comprises constructing the diffuser with a small apex angle and with a relatively great length. This measure will remedy the above-mentioned problems in part. However, only a poor flow stability is created in devices comprising a grating as well as in devices comprising a diffuser with a small apex angle, and the above-mentioned problems will still occur to a significant degree.

A flue gas conditioning device in which the flue gas delivery consists of a pipe which is tangent to the inlet pipe and is directed obliquely upwards has been marketed by F.L.Smidth under the name of "Conditioning tower, LYR". In this device the flue gas stream is reflected against a closed end of the inlet pipe, which means that the flue gas stream becomes turbulent and therefore does not have a well-defined direction of motion. The problems described above also manifest themselves in this previously known flue gas conditioning device.

A flue gas conditioning device in which the flue gas is introduced perpendicular to the axis of the conditioning chamber and withdrawn from the bottom of the conditioning chamber is disclosed in US-A-3 483 674. This disclosure does not mention any rotational momentum of the flue gas.

Because of a poor stability and thereby poor possibility of controlled regulation of the flue gas stream in the previously known devices there is a need for an improved flue gas conditioning device.

Accordingly, the object of the present invention is to provide a method for conditioning of a flue gas, which method ensures a more stable flue gas stream and, to a greater degree, a high temperature in the area around the wall.

This is achieved by the method according to the invention as defined by the claims.

In such a method, a high temperature at the wall is obtained by virtue of the rotating momentum, which ensures to a greater degree than known before that no water drops occur on the wall.

The flue gas is simultaneously caused to perform an axial movement, and the speed of rotation constitutes between 10 and 40% of the axial speed, preferably about 20%. The axial momentum ensures that the rotating momentum is passed toward the outlet and is also stabilized. With the rotating flow having a speed of rotation of between 10 and 40% of the axial speed, it is moreover possible to obtain pressure conditions which result in a secondary flow directed toward the centre of the rotation. Such a secondary flow will give the injected water drops a prolonged residence time in the conditioning chamber, as the drops are entrained by the flow inwards toward the centre of the rotation and upwards to be included in the rotating flow again, thereby contributing to the efficiency of the conditioning device.

The invention also relates to a flue gas conditioning device for performing the method, said device comprising an inlet, a diffuser in extension of the inlet, and an essentially cylindrical pipe area in extension of the diffuser, said pipe area being equipped with a bottom and an outlet opposite the diffuser, said diffuser and said cylindrical pipe area defining a conditioning chamber, means being provided in an area of the conditioning chamber near the inlet to introduce conditioning water into the flue gas.

This conditioning device is characterized according to the invention as defined by claim 2.

Such a device, like the method, provides a high temperature at the wall by virtue of the rotating momentum, which ensures to a higher degree than known before that no water drops occur on the wall. The axial momentum ensures that the rotating momentum is passed toward the outlet and is also stabilized. With the rotating flow it is moreover possible to obtain pressure conditions which result in a secondary flow directed toward the centre of the rotation. Such a secondary flow will give the injected water drops a prolonged residence time in the conditioning chamber, as the drops are entrained by the flow inwards toward the centre of the rotation and upwards to be included in the rotating flow again, thereby contributing to the efficiency of the conditioning device.

The device according to the invention also comprises means to impart to the rotating flue gas stream a momentum in an axial direction.

Such a rotation and also an axial movement may e.g. be provided in that guide blades are arranged in the inlet, said guide blades extending radially from the centre of the inlet pipe. A further possibility comprises providing a first essentially axial inlet pipe and in association with this a second tangentially directed flue gas inlet pipe.

The invention moreover relates to a use of a conditioning device as described in the foregoing in a cement production system comprising a kiln, a mill, a flue gas conditioning device and a separator. The device is particularly expedient in such a system, since this presents particularly difficult conditions of operation.

The invention will be explained more fully below with reference to the drawing which shows a preferred embodiment of the flue gas conditioning device.

In the drawing:
Figure 1 shows a prior art flue gas conditioning device seen from the side,
Figure 2 shows a previously known flue gas conditioning device seen in section and with flow lines,
Figure 3 shows a previously known flue gas conditioning device seen from the side,
Figure 4 shows a previously known flue gas conditioning device seen in section,
Figure 5 shows a guide blade structure for mounting in the inlet, seen from above and in perspective,
Figure 6 shows a partial section through inlet and diffuser of a flue gas conditioning device in which guide blades are positioned, as shown in figure 5,
Figure 7 shows a flue gas conditioning device seen in section in which the invention is implemented, flow lines being shown for this structure,
Figure 8 shows a speed profile for the flue gas stream in a preferred embodiment of the means to ensure the rotating flow, and
Figure 9 shows a flue gas conditioning device in which a pipe system for axial and tangential introduction of flue gas is provided.

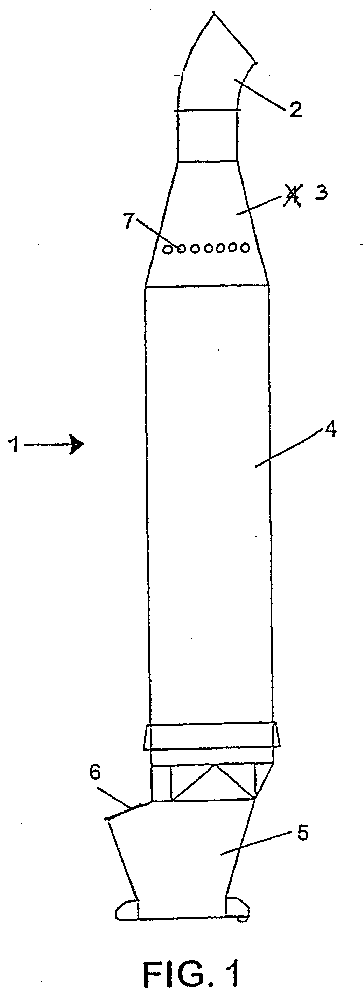

Figure 1 shows a known conditioning device 1 comprising an inlet pipe 2, a diffuser 3, a vertical side wall 4, a base part 5, and an outlet 6. The diffuser 3 is peripherally provided with a number of holes 7 which serve to introduce lances (not shown) having nozzles for the injection of conditioning water. The lances are connected with a water supply. The diffuser may also consist of a single cone, several cones having different angles, or of several cylindrical lengths of pipe having different diameters.

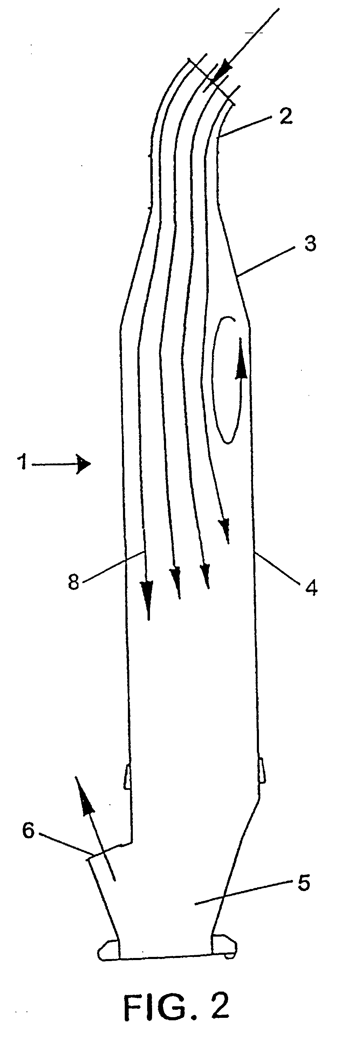

It appears from figure 2, as shown by flow arrows 8, how a separation of the flow in the prior art conditioning device takes place at the side of the lowest pressure (right-hand side of figure 2) in a structure with a great pressure gradient across the inlet. This is inexpedient because it results in a poor efficiency, and because it moreover involves a risk of formation of encrustations.

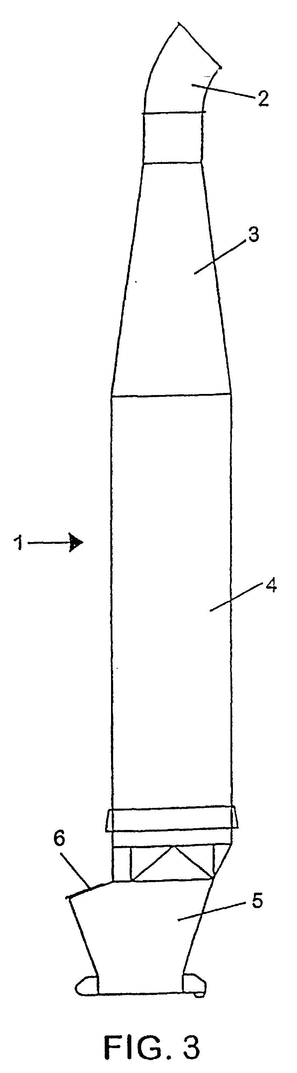

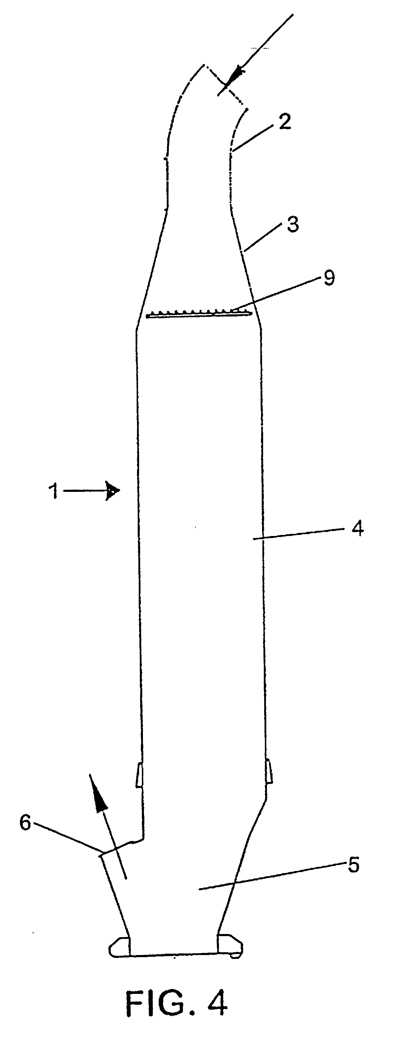

An example of a previously known device is shown in figure 3, in which a long diffuser 3 having a small angle is provided to avoid the flow shown in figure 2. Figure 4 shows a further example of a previously known device in which a grating 9 is provided in the area at the diffuser. These features, however, are not sufficient to provide the desired conditions in the conditioning device.

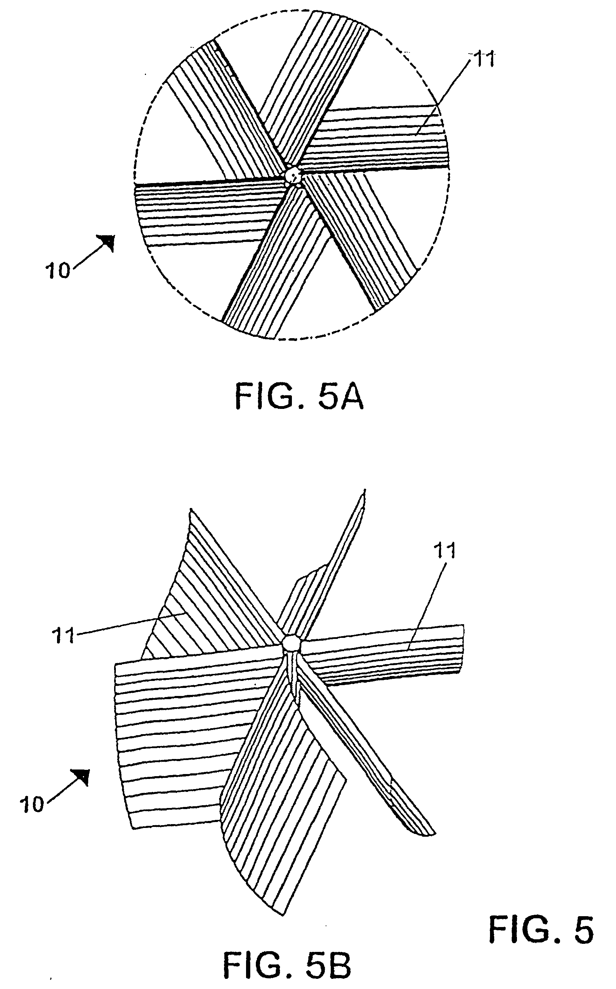

Figure 5 shows a blade structure 10 for mounting in the inlet pipe. As will appear, the structure comprises six blades 11, each of which is formed by a single-curved plate. This gives a particularly simple structure.

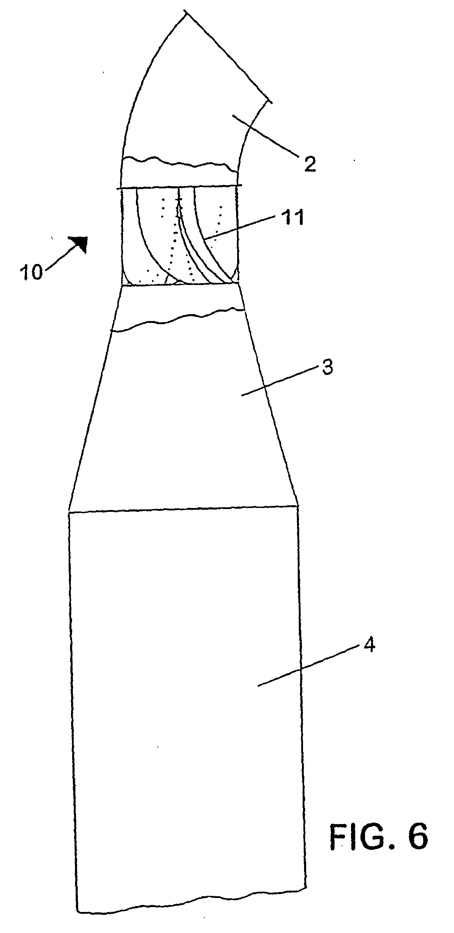

It appears from figure 6, partially in section, how a blade structure 10, as shown in figure 5, is incorporated in a conditioning device to form such a device according to the invention.

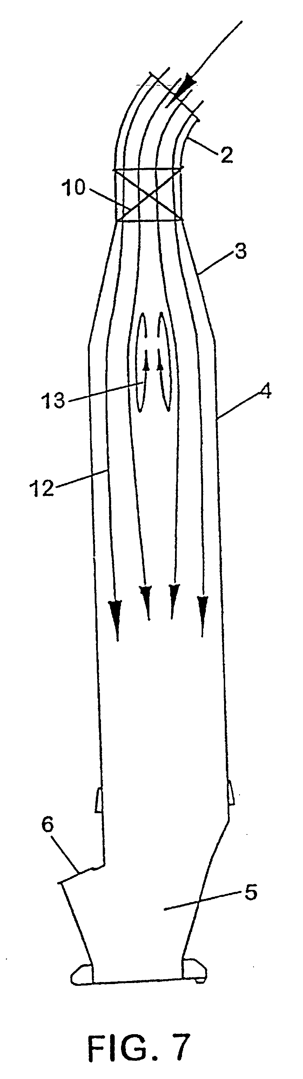

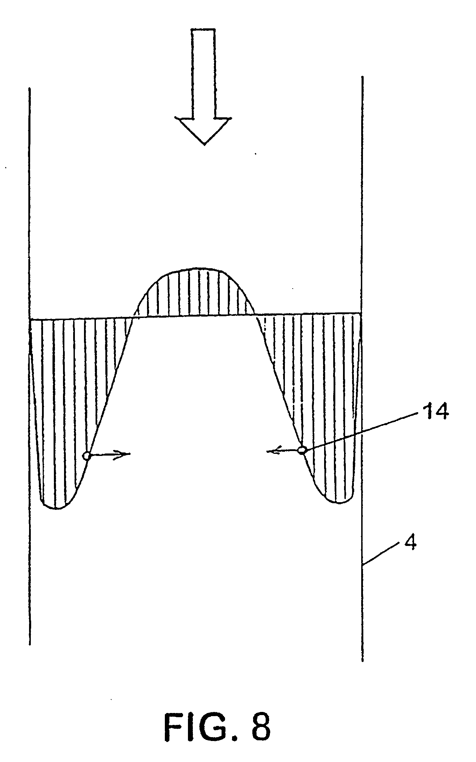

Figure 7 shows a conditioning device in which e.g. blades, as shown in figure 6, are implemented, flow lines 12 after this implementation being shown. It appears that the separation indicated in figure 2 no longer occurs. Also a secondary flow 13 directed toward the conditioning chamber is visible. This likewise appears from figure 8 which shows a speed profile through this upper area of the conditioning chamber. It appears that there is a relatively great speed close to the inner wall, which indicates that a hot gas flows here, and that there is thus little risk of water drop settlement. The secondary flow is shown as a negative speed. A water drop 14 is indicated as being entrained.

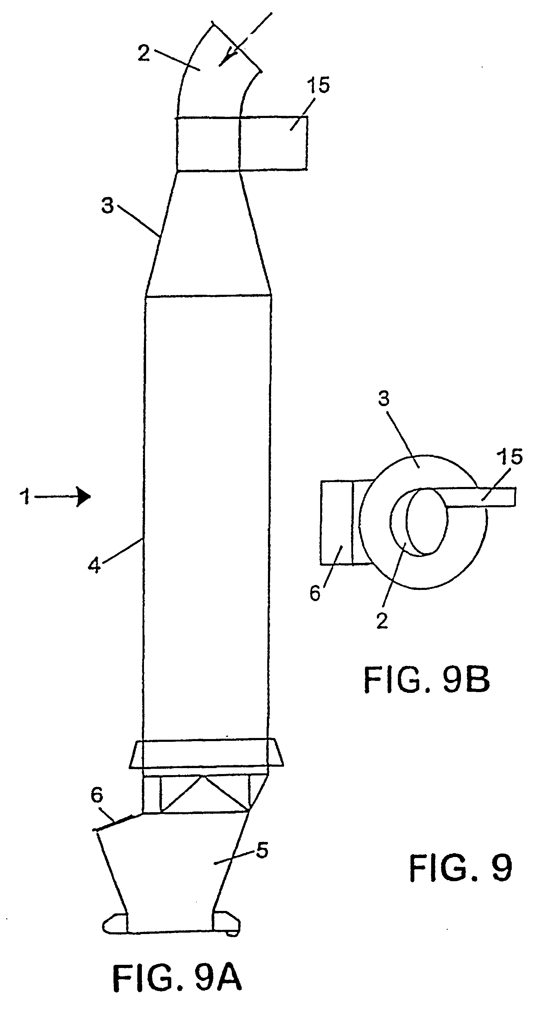

Figure 9 shows an alternative embodiment of the invention, in which a tangential inlet 15 is provided in addition to the axial inlet 2. Both a downward flow and a rotating flow are provided hereby.

## Claims

1. A method for conditioning of flue gas where the flue gas is lead to a flue gas conditioning device comprising an inlet, (2) a diffuser (3) in extension of the inlet (2) and an essentially cylindrical pipe area (4) in extension of the diffuser (3), said pipe area (4) being equipped with a bottom and an outlet (6) opposite the diffuser (3), the inner walls of the diffuser (3) and the cylindrical pipe area (4) defining a conditioning chamber, means being provided in an area of the conditioning chamber near the inlet (2) to introduce conditioning water into the flue gas, providing an elevated temperature at the inner wall which defines the conditioning chamber, **characterized in that** the flue gas stream in the conditioning chamber is caused to perform a rotating movement with respect to an axis extending through the conditioning chamber,
that the flue gas is simultaneously caused to perform an axial movement, and that the speed of rotation constitutes between 10 and 40% of the axial speed.

2. A flue gas conditioning device (1) comprising an inlet (2), a diffuser (3) in extension of the inlet (2) and an essentially cylindrical pipe area (4) in extension of the diffuser (3), said pipe area (4) being equipped with a bottom and an outlet (6) opposite the diffuser (3), said diffuser (3) and said cylindrical pipe area (4) defining a conditioning chamber, means being provided in an area of the conditioning chamber near the inlet to introduce conditioning water into the flue gas, **characterized in that** means (10-15) to impart a rotating momentum and means to impart an axial momentum to the flue gas are provided, whereby the means to generate the rotating momentum and the means to generate the axial momentum are adapted such that the speed of rotation corresponds to 10-40% of the axial speed in the conditioning chamber.

3. A flue gas conditioning device according to claim 2, **characterized in that** guide blades (11) are provided, said guide blades (11) extending radially in the inlet (2) and/or in the diffuser (3).

4. A flue gas conditioning device according to claim 2 or 3 4, **characterized in that** a first essentially axial inlet pipe (2) is provided, and that, in association with this, a second tangentially directed flue gas inlet pipe (15) is provided.

5. A flue gas conditioning device according to claim 3, **characterized in that** the guide blades (11) are single-curved plates in which the curvature extends transversely to the radial direction.

6. A flue gas conditioning device according to claim 3 or 5, **characterized in that** between 2 and 12 blades (11) are provided, and that the blades (11) have a height of up to 2 inlet pipe diameters.

7. The use of a conditioning device as defined in any one of claims 2-6 in a cement production system comprising a kiln, a mill, a flue gas conditioning device (1) and a separator.

## Patentansprüche

1. Verfahren zur Rauchgasbehandlung, bei dem die Rauchgase zu einer Rauchgasbehandlungsvorrichtung geleitet werden, die einen Einlass (2), einen Zerstäuber (3) in Verlängerung des Einlasses (2) und eine im Wesentlichen zylindrische Rohrzone (4) in Verlängerung des Zerstäubers (3) umfasst, wobei die benannte Rohrzone (4) mit einem Boden und einem Auslass (6) dem Zerstäuber (3) gegenüber ausgerüstet ist, die Innenwände des Zerstäubers (3) und der zylindrischen Rohrzone (4) eine Behandlungskammer definieren, Mittel in einer Zone der Behandlungskammer nahe dem Einlass (2) zur Verfügung gestellt werden, um Behandlungswasser in die Rauchgase einzuführen, und eine erhöhte Temperatur an der Innenwandung zur Verfügung gestellt wird, die die Behandlungskammer definiert, **dadurch gekennzeichnet, dass** der Rauchgasstrom in der Behandlungskammer veranlasst wird, eine kreisende Bewegung bezüglich einer sich durch die Behandlungskammer erstreckenden Achse auszuführen, dass die Rauchgase gleichzeitig veranlasst werden, eine axiale Bewegung auszuführen, und dass die Geschwindigkeit der kreisenden Bewegung zwischen 10 und 40 % der Axialgeschwindigkeit beträgt.

2. Vorrichtung (1) zur Rauchgasbehandlung, die einen Einlass (2), einen Zerstäuber (3) in Verlängerung des Einlasses (2) und eine im Wesentlichen zylindrische Rohrzone (4) in Verlängerung des Zerstäubers (3) umfasst, wobei die benannte Rohrzone (4) mit einem Boden und einem Auslass (6) dem Zerstäuber (3) gegenüber ausgerüstet ist, der benannte Zerstäuber (3) und die benannte zylindrische Rohrzone (4) eine Behandlungskammer definieren und Mittel in einer Zone der Behandlungskammer nahe dem Einlass zur Verfügung gestellt werden, um Behandlungswasser in die Rauchgase einzuführen, **dadurch gekennzeichnet, dass** Mittel (10 - 15) zur Verfügung gestellt werden, um den Rauchgasen ein Kreismoment und ein Axialmoment zu erteilen, wobei die Mittel zur Erzeugung des Kreismoments und die Mittel zur Erzeugung des Axialmoments so angepasst sind, dass die Geschwindigkeit der kreisenden Bewegung 10 bis 40 % der Axialgeschwindigkeit in der Behandlungskammer entspricht.

3. Rauchgasbehandlungsvorrichtung gemäss Anspruch 2, **dadurch gekennzeichnet, dass** Führungsschaufeln (11) zur Verfügung gestellt werden, wobei sich die benannten Führungsschaufeln (11) radial im Einlass (2) und/oder im Zerstäuber (3) erstrecken.

4. Rauchgasbehandlungsvorrichtung gemäss Anspruch 2 oder 3, **dadurch gekennzeichnet, dass** ein erstes, im Wesentlichen axiales Einlassrohr (2) zur Verfügung gestellt wird und dass in Verbindung damit ein zweites, tangential ausgerichtetes Rauchgaseinleitungsrohr (15) zur Verfügung gestellt wird.

5. Rauchgasbehandlungsvorrichtung gemäss Anspruch 3, **dadurch gekennzeichnet, dass** die Führungsschaufeln (11) einfach gewölbte Platten sind, in denen die Krümmung sich quer zur radialen Richtung erstreckt.

6. Rauchgasbehandlungsvorrichtung gemäss Anspruch 3 oder 5, **dadurch gekennzeichnet, dass** zwischen 2 und 12 Schaufeln (11) vorgesehen sind und dass die Schaufeln (11) eine Höhe von bis zu zwei Einlassrohrdurchmessern haben.

7. Verwendung einer Behandlungsvorrichtung, wie in einem beliebigen der Ansprüche 2 bis 6 definiert, in einem Zementherstellungssystem mit einem Ofen, einer Mühle, einer Rauchgasbehandlungsvorrichtung (1) und einem Separator.

## Revendications

1. Procédé de conditionnement d'un gaz effluent, dans lequel le gaz effluent est dirigé sur un dispositif de conditionnement d'un gaz effluent comprenant une entrée (2), un diffuseur (3) en prolongement de l'entrée (2) et une région de conduite sensiblement cylindrique (4) en prolongement du diffuseur (3), ladite région de conduite (4) étant équipée d'un fond et d'une sortie (6) à l'opposé du diffuseur (3), les parois internes du diffuseur (3) et la région de conduite cylindrique (4) délimitant une chambre de conditionnement, des moyens étant prévus dans une région de la chambre de conditionnement près de l'entrée (2) pour introduire de l'eau de conditionnement dans le gaz effluent, en assurant une température élevée au niveau de la paroi interne qui délimite la chambre de conditionnement, **caractérisé en ce que** le flux de gaz effluent dans la chambre de conditionnement est dirigé de manière à effectuer un mouvement de rotation par rapport à un axe traversant la chambre de conditionnement, **en ce que** le gaz effluent est dirigé simultanément pour effectuer un mouvement axial et **en ce que** la vitesse de rotation constitue entre 10 et 40 % de la vitesse axiale.

2. Dispositif (1) de conditionnement d'un gaz effluent comprenant une entrée (2), un diffuseur (3) en prolongement de l'entrée (2) et une région de conduite sensiblement cylindrique (4) en prolongement du diffuseur (3), ladite région de conduite (4) étant équipée d'un fond et d'une sortie (6) à l'opposé du diffuseur (3), ledit diffuseur (3) et ladite région de conduite cylindrique (4) délimitant une chambre de conditionnement, des moyens étant prévus dans une région de la chambre de conditionnement, près de l'entrée, pour introduire l'eau de conditionnement dans le gaz effluent, **caractérisé en ce que** l'on prévoit des moyens (10 - 15) pour imprimer un mouvement de rotation et des moyens pour imprimer un mouvement axial au gaz effluent, où les moyens pour générer le mouvement de rotation et les moyens pour générer le mouvement axial sont agencés de manière à ce que la vitesse de rotation corresponde à 10 - 40 % de la vitesse axiale dans la chambre de conditionnement.

3. Dispositif de conditionnement d'un gaz effluent selon la revendication 2, **caractérisé en ce que** l'on prévoit des pales de guidage (11), lesdites pales de guidage (11) s'étendant radialement dans l'entrée (2) et / ou dans le diffuseur (3).

4. Dispositif de conditionnement d'un gaz effluent selon la revendication 2 ou la revendication 3, **caractérisé en ce que** l'on prévoit une première conduite d'entrée (2) qui est sensiblement axiale, et **en ce que**, en combinaison avec cela, on prévoit une seconde conduite d'entrée (15) pour le gaz effluent, qui est orientée sensiblement tangentiellement.

5. Dispositif de conditionnement d'un gaz effluent selon la revendication 3, **caractérisé en ce que** les pales de guidage (11) sont des plaques à courbure unique, dans lesquelles la courbure s'étend transversalement par rapport à la direction radiale.

6. Dispositif de conditionnement d'un gaz effluent selon la revendication 3 ou la revendication 5, **caractérisé en ce que** l'on prévoit entre 2 et 12 pales (11) et **en ce que** les pales (11) ont une hauteur allant jusqu'à deux fois le diamètre de la conduite d'entrée.

7. Utilisation d'un dispositif de conditionnement tel qu'il est défini dans une quelconque des revendications 2 - 6, dans un système de production de ciment comprenant un four, un broyeur, un dispositif (1) de conditionnement du gaz effluent et un séparateur.
